# EUROPEAN PATENT APPLICATION

(11) **EP 3 383 108 A1**
(43) Date of publication of application: **03.10.2018**
(21) Application number: 16877145.9
(22) Date of filing: 30.03.2016
(51) Int. Cl.: H04W 72/04

(54) **CARRIER AGGREGATION IMPLEMENTATION METHOD FOR MULTIPLE CARRIERS AND BASE STATION**

(30) Priority: 25.12.2015 CN 201510992952
(71) Applicant: Huawei Technologies Co., Ltd., Longgang District Shenzhen, Guangdong 518129 (CN)
(72) Inventor: LI, Xiaojie, Shenzhen Guangdong 518129 (CN); SHI, Fan, Shenzhen Guangdong 518129 (CN); FAN, Hua, Shenzhen Guangdong 518129 (CN)
(74) Representative: Goddar, Heinz J.
(86) International application number: PCT/CN2016/077781
(87) International publication number: WO 2017/107331

(57) **Abstract**

A carrier aggregation implementation method on multiple carriers and a base station are disclosed, so as to increase utilization of a carrier resource, and increase a service capacity. The method according to embodiments of the present invention includes: establishing, by a base station, a first cell and a second cell; and configuring, by the base station, a first carrier corresponding to the first cell to a carrier aggregation CA primary component carrier of a terminal, and configuring a second carrier corresponding to the second cell to a CA secondary component carrier of the terminal, where the terminal is located in the first cell, and an area in which the terminal is located is not covered by a common control signal carried on the second carrier corresponding to the second cell, where the second carrier corresponding to the second cell is used to carry data information and a dedicated reference signal that need to be sent by the terminal, and the first carrier corresponding to the first cell is used to carry control information corresponding to the data information; or the second carrier corresponding to the second cell is used to carry data information, a dedicated reference signal, and control information corresponding to the data information that need to be sent by the terminal.

## Description

This application claims priority to Chinese Patent Application No. 201510992952.0, filed with the Chinese Patent Office on December 25, 2015 and entitled "CARRIER AGGREGATION IMPLEMENTATION METHOD ON MULTIPLE CARRIERS AND BASE STATION", which is incorporated herein by reference in its entirety.

### TECHNICAL FIELD

The present invention relates to the field of wireless communications technologies, and specifically, to a carrier aggregation implementation method on multiple carriers and a base station.

### BACKGROUND

With popularization of intelligent terminals, and promotion of various services for the intelligent terminals, a demand of a terminal for network traffic increases rapidly. Increase network coverage is one of means for resolving a problem of network traffic, and a multi-carrier inter-frequency policy is a technical means for effectively enhancing coverage and control channel performance.

A common inter-frequency six-sector networking structure is a networking mode that is based on the multi-carrier inter-frequency policy. Inter-frequency six sectors refer to six sectors established in one base station, where frequencies of two neighboring sectors are different, and each sector can use only a resource corresponding to one frequency but cannot use a frequency resource of a neighboring sector. One sector has a relatively small area and has a relatively strong resource coverage capability. However, a resource corresponding to one frequency can be used only in a small area, which causes low utilization of a carrier resource.

### SUMMARY

For the foregoing disadvantage, embodiments of the present invention provide a carrier aggregation implementation method on multiple carriers and a base station, so as to resolve a prior-art problem that utilization of a carrier resource is relatively low, and increase the utilization of the carrier resource.

A first aspect of the present invention provides a carrier aggregation implementation method on multiple carriers, where the method may include:
establishing, by a base station, a first cell and a second cell; and
configuring, by the base station, a first carrier corresponding to the first cell to a carrier aggregation (Carrier Aggregation, CA for short) primary component carrier of a terminal, and configuring a second carrier corresponding to the second cell to a CA secondary component carrier of the terminal, where the terminal is located in the first cell, and an area in which the terminal is located is not covered by a common control signal carried on the second carrier corresponding to the second cell, where
the second carrier corresponding to the second cell is used to carry data information and a dedicated reference signal that need to be sent by the terminal, and the first carrier corresponding to the first cell is used to carry control information corresponding to the data information; or
the second carrier corresponding to the second cell is used to carry data information, a dedicated reference signal, and control information corresponding to the data information that need to be sent by the terminal.

It can be seen from the foregoing technical solution that, in embodiments of the present invention, a same base station establishes the first cell and the second cell. For the terminal (in subsequent content, the terminal is described as a CA terminal) that is located in the first cell and is not covered by the common control signal carried on the second carrier corresponding to the second cell, the base station configures the first carrier corresponding to the first cell to the CA primary component carrier of the CA terminal, and then configures the second carrier corresponding to the second cell to the CA secondary component carrier of the CA terminal. The area in which the CA terminal is located is not covered by the common control signal carried on the second carrier corresponding to the second cell. In other words, the CA terminal cannot send and receive data by using a control channel on the second carrier corresponding to the second cell, but can send and receive data by using a data channel on the second carrier corresponding to the second cell, where the data herein includes control information and data information. Therefore, data information and a dedicated reference signal of the CA terminal may be carried by using the second carrier corresponding to the second cell (the data information and the dedicated reference signal are carried on the data channel on the second carrier), to fully utilize the second carrier corresponding to the second cell, and increase utilization of a carrier resource. When the data information of the CA terminal is carried by using the second carrier corresponding to the second cell, control information corresponding to the data information may be carried by using the first carrier corresponding to the first cell, or control information corresponding to the data information may be carried by using the second carrier corresponding to the second cell (which herein means that the control information is carried by using the data channel on the second carrier corresponding to the second cell because the CA terminal is not covered by the common control signal carried on the second carrier corresponding to the second cell), so that the control information can be correctly obtained, to complete modulation and encoding on the data information. Finally, when the data information of the CA terminal is carried by using the second carrier corresponding to the second cell, regardless of whether the corresponding control information is carried by using the first carrier corresponding to the first cell, or the corresponding control information is carried by using the data channel on the second carrier corresponding to the second cell, the control channel on the second carrier corresponding to the second cell is not used. In this case, even if the control information is sent for a terminal in the second cell still by using the control channel on the second carrier corresponding to the second cell, intra-frequency interference on the control channel between the first cell and the second cell is not caused.

A common control signal provided in some embodiments of the present invention is used to provide a cell measurement reference signal, a broadcast message, or the like to a terminal, to meet requirements for network access of the terminal and data transmission on a control channel. The common control signal may include a common reference signal (Common Reference Signal, CRS for short), physical broadcast channel (Physical Dedicated Chanel, PBCH for short) control information, system broadcast information (System Information Brocast, SIB for short), or the like.

Control information provided in some embodiments of the present invention is used for modulation and encoding of data information such as modulation and coding scheme (Modulation and Coding Scheme, MCS for short) information.

Optionally, when the control information corresponding to the data information is carried by using the data channel on the second carrier corresponding to the second cell, the control information may be specifically carried by using an enhanced physical downlink control channel (Enhanced Physical Downlink Control Channel, EPDCCH for short) on the data channel on the second carrier. When the control information corresponding to the data information is carried by using the first carrier, the control information may be specifically carried by using a physical downlink control channel (Physical Downlink Control Channel, PDCCH for short) on a control channel on the first carrier.

In some embodiments of the present invention, the establishing, by a base station, a first cell and a second cell is specifically implemented in the following manner: The base station transmits a first beam and a second beam by using an antenna, where the first beam is used to send a common control signal carried on the first carrier corresponding to the first cell, and then coverage of the common control signal carried on the first carrier corresponding to the first cell forms the first cell; and the second beam is used to send the common control signal carried on the second carrier corresponding to the second cell, and then coverage of the common control signal carried on the second carrier corresponding to the second cell forms the second cell. It can be seen that, in embodiments of the present invention, the base station may transmit two beams by using an antenna, where spatial orientations of the two beams are different, each beam corresponds to one direction, the beam in one direction covers one cell, and then a common control signal that is carried on a carrier and that is sent by the beam also covers the corresponding cell. In other words, in a spatial orientation of an antenna, an overlapping coverage area between the first cell and the second cell (the overlapping coverage area refers to an area that is covered by the common control signal carried on the first carrier corresponding to the first cell, and that is also covered by the common control signal carried on the second carrier corresponding to the second cell) is reduced as many as possible, to reduce signal interference at edges of the cells. Reducing the overlapping coverage area between the first cell and the second cell further indicates that more areas in the first cell are not covered by the common control signal carried on the second carrier corresponding to the second cell, and then more terminals in the first cell meet a requirement for being configured to the CA terminal, so that data information is carried for a terminal in the areas by using the second carrier corresponding to the second cell, thereby expanding data coverage of the second cell, and increasing a channel capacity.

It should be noted that, the base station may transmit the first beam and the second beam by using one set of antennas, or may transmit the first beam by using one set of antennas, and then transmit the second beam by using another set of antennas. Certainly, one set of antennas herein may include one or more antennas.

In some other embodiments of the present invention, the establishing, by a base station, a first cell and a second cell may alternatively be implemented in the following manner: The base station sets first power and/or a first tilt angle, and the base station further sets second power and/or a second tilt angle. The base station transmits, by using an antenna, a common control signal corresponding to the first power and/or the first tilt angle, and forms the first cell by using the common control signal. The base station transmits, by using an antenna, a common control signal corresponding to the second power and/or the second tilt angle, and forms the second cell by using the common control signal. The overlapping coverage area between the first cell and the second cell is reduced by controlling power and/or a tilt angle; therefore, interference between cells decreases and a channel capacity increases.

It should be noted that, it can be seen from the foregoing two implementation manners of the establishing, by a base station, a first cell and a second cell that, the overlapping coverage area between the first cell and the second cell is only reduced as many as possible, but actually the overlapping coverage area between the first cell and the second cell still exists. Therefore, when the data information is carried for the CA terminal by using both the first carrier corresponding to the first cell and the second carrier corresponding to the second cell, the common control signal, such as a CRS, carried on the second carrier that corresponds to the second cell and that is in the overlapping coverage area further needs to be used to complete time-frequency synchronization of the CA terminal on the second carrier. In addition, the overlapping coverage area also facilitates handover between the first cell and the second cell. For example, when the CA terminal moves to the overlapping coverage area (an edge area of the first cell, where the edge area adjoins the second cell), a channel quality index (Channel Quality Index, CQI for short) is measured by detecting the common control signal carried on the second carrier. In this way, channel quality of the second cell is sensed, to determine whether cell handover needs to be performed.

Optionally, the first cell and the second cell may be two neighboring cells. For example, two neighboring sectors of six sectors may be considered as the first cell and the second cell in embodiments of the present invention. The first cell and the second cell may alternatively be in an inclusion relationship, which means that the second cell is located in the first cell, that is, the overlapping coverage area between the first cell and the second cell is equal to the second cell.

In some embodiments of the present invention, the base station may configure a space division multiplexing (Space Division Multiplexing, SDM for short) scheduling policy for the second carrier corresponding to the second cell, and then the base station may schedule, based on the SDM scheduling policy and in different space, the second carrier corresponding to the second cell, to carry data information and a dedicated reference signal for the CA terminal, and carry data information for a terminal in the second cell.

In some embodiments of the present invention, the second carrier corresponding to the second cell is further used to send a user dedicated measurement signal, where the user dedicated measurement signal covers at least the first cell. Then, in this scenario, if the second carrier corresponding to the second cell is used to carry data information sent by the CA terminal, and the user dedicated measurement signal is sent by using the second carrier corresponding to the second cell, because the user dedicated measurement signal covers the first cell, the CA terminal can correctly parse the user dedicated measurement signal, to complete corresponding measurement, thereby implementing a corresponding service.

In an application scenario of the first cell and the second cell that are provided in some embodiments of the present invention, another base station may further establish a third cell, where the third cell also corresponds to a second carrier, and there is no overlapping coverage area between the second cell and the third cell. In this case, if data is carried, for a terminal in the second cell, on the second carrier corresponding to the second cell, and data is carried, for a terminal in the third cell, on the second carrier corresponding to the third cell, interference (including interference on a data channel and a control channel) between the second cell and the third cell is not caused. Further, in this scenario, the area in which the CA terminal is located is not covered by the common control signal carried on the second carrier corresponding to the second cell, and is also not in an overlapping coverage area between the first cell and the third cell. Therefore, when the data information and the dedicated reference signal are carried for the CA terminal by using the second carrier corresponding to the second cell, data may be carried for a terminal in the third cell by using the second carrier corresponding to the third cell, so that when the CA terminal uses the second carrier of the second cell and the terminal in the third cell uses the second carrier corresponding to the third cell, signal interference is not caused. When another base station does not use the second carrier corresponding to the third cell, a first base station may invoke the second carrier corresponding to the second cell, to carry the data information for the CA terminal located in the overlapping coverage area between the first cell and the third cell. Specifically, based on a time-division multiplexing mode, the CA terminal in the overlapping coverage area between the first cell and the third cell uses the second carrier corresponding to the second cell, and the terminal in the third cell uses the second carrier corresponding to the third cell.

A second aspect of the present invention provides a carrier aggregation implementation method on multiple carriers, where the method may include:
establishing, by a first base station, a first cell; and
configuring, by the first base station, a first carrier corresponding to the first cell to a carrier aggregation CA primary component carrier of a terminal, and configuring a second carrier corresponding to a second cell to a CA secondary component carrier of the terminal, where the second cell is established by a second base station, the terminal is located in the first cell, and an area in which the terminal is located is not covered by a common control signal carried on the second carrier corresponding to the second cell, where
the second carrier corresponding to the second cell is used to carry data information and a dedicated reference signal that need to be sent by the terminal, and the first carrier corresponding to the first cell is used to carry control information corresponding to the data information; or
the second carrier corresponding to the second cell is used to carry data information, a dedicated reference signal, and control information corresponding to the data information that need to be sent by the terminal.

It can be seen that, the carrier aggregation implementation method on multiple carriers that is provided according to the second aspect is compared with the carrier aggregation implementation method on multiple carriers that is provided according to the first aspect, in the second aspect, the first base station establishes only the first cell, and the second cell is established by the second base station. The first cell corresponds to the first carrier, and the second cell corresponds to the second carrier, which implements inter-frequency of common control channels between the two cells, thereby reducing interference between the common control channels between the two cells. For the terminal (in subsequent content, the terminal is described as a CA terminal) that is located in the first cell and is not covered by the common control signal carried on the second carrier corresponding to the second cell, the base station configures the first carrier corresponding to the first cell to the CA primary component carrier of the CA terminal, and then configures the second carrier corresponding to the second cell to the CA secondary component carrier of the CA terminal. The area in which the CA terminal is located is not covered by the common control signal carried on the second carrier corresponding to the second cell. In other words, the CA terminal cannot send and receive data by using a control channel on the second carrier corresponding to the second cell, but can send and receive data by using a data channel on the second carrier corresponding to the second cell, where the data herein includes control information and data information. Therefore, data information and a dedicated reference signal of the CA terminal may be carried by using the second carrier corresponding to the second cell (the data information and the dedicated reference signal are carried on the data channel on the second carrier), to fully utilize the second carrier corresponding to the second cell, and increase utilization of a carrier resource. When the data information of the CA terminal is carried by using the second carrier corresponding to the second cell, control information corresponding to the data information may be carried by using the first carrier corresponding to the first cell, or control information corresponding to the data information may be carried by using the second carrier corresponding to the second cell (which herein means that the control information is carried by using the data channel on the second carrier corresponding to the second cell because the CA terminal is not covered by the common control signal carried on the second carrier corresponding to the second cell), so that the control information can be correctly obtained, to complete modulation and encoding on the data information. Finally, when the data information of the CA terminal is carried by using the second carrier corresponding to the second cell, regardless of whether the corresponding control information is carried by using the first carrier corresponding to the first cell, or the corresponding control information is carried by using the data channel on the second carrier corresponding to the second cell, the control channel on the second carrier corresponding to the second cell is not used. In this case, even if the control information is sent for a terminal in the second cell still by using the control channel on the second carrier corresponding to the second cell, intra-frequency interference on the control channel between the first cell and the second cell is not caused.

A common control signal provided in some embodiments of the present invention is used to provide a cell measurement reference signal, a broadcast message, or the like to a terminal, to meet requirements for network access of the terminal and data transmission on a control channel. The common control signal may include a CRS, a PBCH, SIB, or the like.

Control information provided in some embodiments of the present invention is used for modulation and encoding of data information such as MCS information.

Optionally, when the control information corresponding to the data information is carried by using the data channel on the second carrier corresponding to the second cell, the control information may be specifically carried by using an EPDCCH on the data channel on the second carrier. When the control information corresponding to the data information is carried by using the first carrier, the control information may be specifically carried by using a PDCCH on a control channel on the first carrier.

In some embodiments of the present invention, the establishing, by a first base station, a first cell is specifically implemented in the following manner: The first base station transmits a first beam by using one set of antennas, where the first beam is used to send a common control signal carried on the first carrier corresponding to the first cell, and then coverage of the common control signal carried on the first carrier corresponding to the first cell forms the first cell. The first base station may perform spatial orientation on the first beam, so that the first beam corresponds to one direction, and then coverage in the direction forms the first cell.

In some embodiments of the present invention, the second cell is established by the second base station. Specifically, the second base station transmits a second beam by using one set of antennas, where the second beam is used to send the common control signal carried on the second carrier corresponding to the second cell, and then coverage of the common control signal carried on the second carrier corresponding to the second cell forms the second cell. The second base station performs spatial orientation on the second beam, so that the second beam corresponds to another direction, and then coverage in the direction forms the second cell.

It should be noted that, when the first base station performs spatial orientation on the first beam, and the second base station performs spatial orientation on the second beam, it needs to ensure that the first beam and the second beam spatially correspond to different methods, to reduce an overlapping coverage area between the first cell and the second cell.

In some other embodiments of the present invention, the establishing, by a first base station, a first cell may alternatively be implemented in the following manner: The first base station sets first power and/or a first tilt angle, the base station transmits, by using one set of antennas, a common control signal corresponding to the first power and/or the first tilt angle, and forms the first cell by using the common control signal.

In some embodiments of the present invention, that a second cell is established by a second base station indicates that the second base station sets second power and/or a second tilt angle, and the second base station transmits, by using one set of antennas, a common control signal corresponding to the second power and/or the second tilt angle, and forms the second cell by using the common control signal.

The first base station controls power and/or a tilt angle, and the second base station also controls power and a tilt angle, so as to reduce the overlapping coverage area between the first cell and the second cell. Therefore, interference between cells decreases, and a channel capacity increases.

Optionally, the set of antennas used by the first base station and the set of antennas used by the second base station are two different sets of antennas, and each set of antennas may include one or more antennas.

It should be noted that, it can be seen from the foregoing two implementation manners of the establishing, by a first base station, a first cell and a second cell that, the overlapping coverage area between the first cell and the second cell is only reduced as many as possible, but actually the overlapping coverage area between the first cell and the second cell still exists. Therefore, when the data information is carried for the CA terminal by using both the first carrier corresponding to the first cell and the second carrier corresponding to the second cell, the common control signal, such as a CRS, carried on the second carrier that corresponds to the second cell and that is in the overlapping coverage area further needs to be used to complete time-frequency synchronization of the CA terminal on the second carrier. In addition, the overlapping coverage area also facilitates handover between the first cell and the second cell. For example, when the CA terminal moves to the overlapping coverage area (an edge area of the first cell, where the edge area adjoins the second cell), a channel quality index (Channel Quality Index, CQI for short) is measured by detecting the common control signal carried on the second carrier. In this way, channel quality of the second cell is sensed, to determine whether cell handover needs to be performed.

Optionally, the first cell and the second cell may be two neighboring cells. For example, two neighboring sectors of six sectors may be considered as the first cell and the second cell in embodiments of the present invention. The first cell and the second cell may alternatively be in an inclusion relationship, which means that the second cell is located in the first cell, that is, the overlapping coverage area between the first cell and the second cell is equal to the second cell.

In some embodiments of the present invention, the first base station may configure an SDM scheduling policy for the second carrier corresponding to the second cell, and then the first base station may schedule, based on the SDM scheduling policy and in different space, the second carrier corresponding to the second cell, to carry data information and a dedicated reference signal for the CA terminal, and the second base station may schedule the second carrier corresponding to the second cell to carry the data information and the control information for a terminal in the second cell.

In some embodiments of the present invention, the second carrier corresponding to the second cell is further used to send a user dedicated measurement signal, where the user dedicated measurement signal covers at least the first cell. Then, in this scenario, if the second carrier corresponding to the second cell is used to carry data information sent by the CA terminal, and the user dedicated measurement signal is sent by using the second carrier corresponding to the second cell, because the user dedicated measurement signal covers the first cell, the CA terminal can correctly parse the user dedicated measurement signal, to complete corresponding measurement, thereby implementing a corresponding service.

In an application scenario of the first cell and the second cell that are provided in some embodiments of the present invention, a third base station may further establish a third cell, where the third cell also corresponds to a second carrier, and there is no overlapping coverage area between the second cell and the third cell. In this case, if data is carried, for a terminal in the second cell, on the second carrier corresponding to the second cell, and data is carried, for a terminal in the third cell, on the second carrier corresponding to the third cell, interference (including interference on a data channel and a control channel) between the second cell and the third cell is not caused. Further, in this scenario, the area in which the CA terminal is located is not covered by the common control signal carried on the second carrier corresponding to the second cell, and is also not in an overlapping coverage area between the first cell and the third cell. Therefore, when the data information and the dedicated reference signal are carried for the CA terminal by using the second carrier corresponding to the second cell, data may be carried for a terminal in the third cell by using the second carrier corresponding to the third cell, so that when the CA terminal uses the second carrier of the second cell and the terminal in the third cell uses the second carrier corresponding to the third cell, signal interference is not caused. When the third base station does not use the second carrier corresponding to the third cell, the first base station may invoke the second carrier corresponding to the second cell, to carry data for the CA terminal located in the overlapping coverage area between the first cell and the third cell. Specifically, based on a time-division multiplexing mode, the CA terminal in the overlapping coverage area between the first cell and the third cell uses the second carrier corresponding to the second cell, and the terminal in the third cell uses the second carrier corresponding to the third cell.

A third aspect of the present invention provides a base station, where the base station may include:
an establishment module, configured to establish a first cell and a second cell; and
a configuration module, configured to: configure a first carrier corresponding to the first cell to a carrier aggregation CA primary component carrier of a terminal, and configure a second carrier corresponding to the second cell to a CA secondary component carrier of the terminal, where the terminal is located in the first cell, and an area in which the terminal is located is not covered by a common control signal carried on the second carrier corresponding to the second cell, where
the second carrier corresponding to the second cell is used to carry data information and a dedicated reference signal that need to be sent by the terminal, and the first carrier corresponding to the first cell is used to carry control information corresponding to the data information; or
the second carrier corresponding to the second cell is used to carry data information, a dedicated reference signal, and control information corresponding to the data information that need to be sent by the terminal.

It can be seen that, in embodiments of the present invention, the establishment module establishes the first cell and the second cell, and then the configuration module configures the first carrier corresponding to the first cell to the carrier aggregation CA primary component carrier of the terminal, and configures the second carrier corresponding to the second cell to the CA secondary component carrier of the terminal, so that when the terminal is located in the first cell, and is not covered by the common control signal carried on the second carrier corresponding to the second cell, the data information and the dedicated reference signal can be carried by using the second carrier corresponding to the second cell, to increase utilization of a resource, and increase a service channel capacity.

In some embodiments of the present invention, the establishment module is specifically configured to transmit a first beam and a second beam by using an antenna, where the first beam is used to send a common control signal carried on the first carrier corresponding to the first cell, and coverage of the common control signal carried on the first carrier corresponding to the first cell forms the first cell; and the second beam is used to send the common control signal carried on the second carrier corresponding to the second cell, and coverage of the common control signal carried on the second carrier corresponding to the second cell forms the second cell.

In some embodiments of the present invention, the base station further includes a scheduling module, configured to: schedule, in different space, the second carrier corresponding to the second cell, use the second carrier corresponding to the second cell to carry the data information and the dedicated reference signal for the terminal, and use the second carrier corresponding to the second cell to carry data information for a terminal covered by the second carrier corresponding to the second cell.

Optionally, the second carrier corresponding to the second cell is further used to send a user dedicated measurement signal, where the user dedicated measurement signal covers at least the first cell.

Optionally, the common control signal includes a common reference signal CRS, physical broadcast channel PBCH control information, and system broadcast information SIB.

In some embodiments of the present invention, if another base station other than the base station establishes a third cell, the third cell configures a second carrier, there is an overlapping coverage area between the second cell and the first cell, there is no overlapping coverage area between the second cell and the third cell, and the area in which the terminal is located is not located in the overlapping coverage area between the first cell and the second cell and is not located in an overlapping coverage area between the first cell and the third cell, when the another base station does not schedule the second carrier corresponding to the third cell, the scheduling module is further configured to schedule the second carrier corresponding to the second cell.

A fourth aspect of the present invention provides a base station, where the base station may include:
an establishment module, configured to establish a first cell; and
a configuration module, configured to: configure a first carrier corresponding to the first cell to a carrier aggregation CA primary component carrier of a terminal, and configure a second carrier corresponding to a second cell to a CA secondary component carrier of the terminal, where the second cell is established by a second base station, the terminal is located in the first cell, and an area in which the terminal is located is not covered by a common control signal carried on the second carrier corresponding to the second cell, where
the second carrier corresponding to the second cell is used to carry data information and a dedicated reference signal that need to be sent by the terminal, and the first carrier corresponding to the first cell is used to carry control information corresponding to the data information; or
the second carrier corresponding to the second cell is used to carry data information, a dedicated reference signal, and control information corresponding to the data information that need to be sent by the terminal.

It can be seen that, in embodiments of the present invention, the establishment module establishes the first cell, and in combination with the second cell established by the second base station, the configuration module configures the first carrier corresponding to the first cell to the carrier aggregation CA primary component carrier of the terminal, and configures the second carrier corresponding to the second cell to the CA secondary component carrier corresponding to the terminal, so that when the terminal is located in the first cell, and is not covered by the common control signal carried on the second carrier corresponding to the second cell, the data information and the dedicated reference signal can be carried by using the second carrier corresponding to the second cell, to increase utilization of a resource, and increase a service channel capacity.

In some embodiments of the present invention, the establishment module is specifically configured to transmit a first beam by using an antenna, where the first beam is used to send a common control signal carried on the first carrier corresponding to the first cell, and coverage of the common control signal carried on the first carrier corresponding to the first cell forms the first cell.

Optionally, the second carrier corresponding to the second cell is further used to send a user dedicated measurement signal, where the user dedicated measurement signal covers at least the first cell.

Optionally, the common control signal includes a common reference signal CRS, physical broadcast channel PBCH control information, and system broadcast information SIB.

In some embodiments of the present invention, the base station further includes a scheduling module, configured to: schedule, in different space, the second carrier corresponding to the second cell, use the second carrier corresponding to the second cell to carry the data information and the dedicated reference signal for the terminal, and use the second carrier corresponding to the second cell to carry data information for a terminal covered by the second carrier corresponding to the second cell.

In some embodiments of the present invention, if a third base station establishes a third cell, the third cell configures a second carrier, there is an overlapping coverage area between the second cell and the first cell, there is no overlapping coverage area between the second cell and the third cell, and the area in which the terminal is located is not located in the overlapping coverage area between the first cell and the second cell and is not located in an overlapping coverage area between the first cell and the third cell, when the third base station does not schedule the second carrier corresponding to the third cell, the scheduling module is further configured to schedule the second carrier corresponding to the second cell.

A fifth aspect of the present invention provides a base station, where the base station may include:
a receiver, a transmitter, a memory, and a processor that are connected by using a bus, where
the memory is configured to store a program instruction;
the processor is configured to execute the program instruction stored in the memory; and
the processor is further configured to: establish a first cell and a second cell; and configure a first carrier corresponding to the first cell to a carrier aggregation CA primary component carrier of a terminal, and configure a second carrier corresponding to the second cell to a CA secondary component carrier of the terminal, where the terminal is located in the first cell, and an area in which the terminal is located is not covered by a common control signal carried on the second carrier corresponding to the second cell, where
the second carrier corresponding to the second cell is used to carry data information and a dedicated reference signal that need to be sent by the terminal, and the first carrier corresponding to the first cell is used to carry control information corresponding to the data information; or
the second carrier corresponding to the second cell is used to carry data information, a dedicated reference signal, and control information corresponding to the data information that need to be sent by the terminal.

In some embodiments of the present invention, the processor is specifically configured to transmit a first beam and a second beam by using an antenna, where the first beam is used to send a common control signal carried on the first carrier corresponding to the first cell, and coverage of the common control signal carried on the first carrier corresponding to the first cell forms the first cell; and the second beam is used to send the common control signal carried on the second carrier corresponding to the second cell, and coverage of the common control signal carried on the second carrier corresponding to the second cell forms the second cell.

In some embodiments of the present invention, the processor is further configured to: schedule, in different space, the second carrier corresponding to the second cell, use the second carrier corresponding to the second cell to carry the data information and the dedicated reference signal for the terminal, and use the second carrier corresponding to the second cell to carry data information for a terminal covered by the second carrier corresponding to the second cell.

Optionally, the second carrier corresponding to the second cell is further used to send a user dedicated measurement signal, where the user dedicated measurement signal covers at least the first cell.

Optionally, the common control signal includes a common reference signal CRS, physical broadcast channel PBCH control information, and system broadcast information SIB.

In some embodiments of the present invention, if another base station other than the base station establishes a third cell, the third cell configures a second carrier, there is an overlapping coverage area between the second cell and the first cell, there is no overlapping coverage area between the second cell and the third cell, and the area in which the terminal is located is not located in the overlapping coverage area between the first cell and the second cell and is not located in an overlapping coverage area between the first cell and the third cell, when the another base station does not schedule the second carrier corresponding to the third cell, the processor is further configured to schedule the second carrier corresponding to the second cell.

A sixth aspect of the present invention provides a base station, where the base station may include:
a receiver, a transmitter, a memory, and a processor that are connected by using a bus, where
the memory is configured to store a program instruction;
the processor is configured to execute the program instruction stored in the memory; and
the processor is further configured to: establish a first cell; and configure a first carrier corresponding to the first cell to a carrier aggregation CA primary component carrier of a terminal, and configure a second carrier corresponding to the second cell to a CA secondary component carrier of the terminal, where the second cell is established by a second base station, the terminal is located in the first cell, and an area in which the terminal is located is not covered by a common control signal carried on the second carrier corresponding to the second cell, where
the second carrier corresponding to the second cell is used to carry data information and a dedicated reference signal that need to be sent by the terminal, and the first carrier corresponding to the first cell is used to carry control information corresponding to the data information; or
the second carrier corresponding to the second cell is used to carry data information, a dedicated reference signal, and control information corresponding to the data information that need to be sent by the terminal.

In some embodiments of the present invention, the processor is specifically configured to transmit a first beam by using an antenna, where the first beam is used to send a common control signal carried on the first carrier corresponding to the first cell, and coverage of the common control signal carried on the first carrier corresponding to the first cell forms the first cell.

Optionally, the second carrier corresponding to the second cell is further used to send a user dedicated measurement signal, where the user dedicated measurement signal covers at least the first cell.

Optionally, the common control signal includes a common reference signal CRS, physical broadcast channel PBCH control information, and system broadcast information SIB.

In some embodiments of the present invention, the processor is further configured to: schedule, in different space, the second carrier corresponding to the second cell, use the second carrier corresponding to the second cell to carry the data information and the dedicated reference signal for the terminal, and use the second carrier corresponding to the second cell to carry data information for a terminal covered by the second carrier corresponding to the second cell.

In some embodiments of the present invention, if a third base station establishes a third cell, the third cell configures a second carrier, there is an overlapping coverage area between the second cell and the first cell, there is no overlapping coverage area between the second cell and the third cell, and the area in which the terminal is located is not located in the overlapping coverage area between the first cell and the second cell and is not located in an overlapping coverage area between the first cell and the third cell, when the third base station does not schedule the second carrier corresponding to the third cell, the processor is further configured to schedule the second carrier corresponding to the second cell.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1a is a cellular networking structure according to some embodiments of the present invention;
FIG. 1b is a public network networking structure according to some embodiments of the present invention;
FIG. 2a is a schematic flowchart of a carrier aggregation implementation method on multiple carriers according to an embodiment of the present invention;
FIG. 2b is a partial schematic structural diagram of a cellular networking structure according to an embodiment of the present invention;
FIG. 3 is a schematic flowchart of a carrier aggregation implementation method on multiple carriers according to some other embodiments of the present invention;
FIG. 4a is a schematic application diagram of carrying data information across carriers according to an embodiment of the present invention;
FIG. 4b is a schematic diagram of cross-carrier scheduling according to an embodiment of the present invention;
FIG. 5 is a schematic application diagram of a carrier aggregation implementation method on multiple carriers according to an embodiment of the present invention;
FIG. 6 is a schematic structural diagram of a base station according to an embodiment of the present invention;
FIG. 7 is a schematic structural diagram of a base station according to some other embodiments of the present invention;
FIG. 8 is another schematic structural diagram of a base station according to an embodiment of the present invention; and
FIG. 9 is another schematic structural diagram of a base station according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

An embodiment of the present invention provides a carrier aggregation implementation method on multiple carriers, so as to increase utilization of a carrier resource, and increase a service capacity. An embodiment of the present invention further correspondingly provides a base station corresponding to the carrier aggregation implementation method on multiple carriers.

The carrier aggregation implementation method provided in this embodiment of the present invention may be applied to cellular networking in a cellular communications system, for example, six-sector networking, and may be further applied to public network networking (the public network networking refers to a networking manner of a public network, and the public network refers to a common circuit switched network, for example, backbone and branch networks established by Deutsche Telekom, China Telecom, and the like). First, the cellular networking and the public network networking are described briefly. In the cellular networking or the public network networking, a base station may use an omni-directional antenna to implement cell coverage, or may use a directional antenna to implement cell coverage. Using an omni-directional antenna to implement cell coverage refers to using one set of omni-directional antennas to cover one cell or cover multiple cells (when there are multiple cells, each cell corresponds to a different carrier). Using a directional antenna to implement cell coverage refers to using one set of directional antennas to cover one cell or cover multiple cells (when there are multiple cells, each cell corresponds to a different carrier). One set of omni-directional antennas includes one or more omni-directional antennas, and one set of directional antennas includes one or more directional antennas.

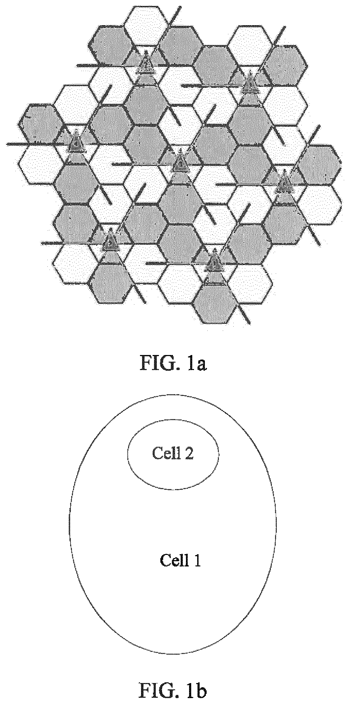

FIG. 1a is a cellular networking structure according to some embodiments of the present invention. In the embodiments of the present invention, a detailed description is provided by using an example in which a base station uses one set of 120-degree directional antennas to cover two cells. That is, three sets of directional antennas are configured for one base station, directions of the three sets of directional antennas are different, and each set of antennas covers a range of 120°. In FIG. 1a, the base station is represented by using a triangle. In FIG. 1a, a black bold line extended from the triangle indicates a set of directional antennas. As shown in FIG. 1a, in the embodiments of the present invention, the base station is disposed in a middle area of a hexagon, and each set of directional antennas corresponds to two cells, that is, one base station can cover six cells (which correspond to seven hexagons). One set of directional antennas generates beams in two directions, where a beam in one direction covers one cell, and a beam in the other direction covers the other cell. In addition to another two sets of directional antennas, a total of six cells are covered, and seven hexagons are obtained. After combination with multiple base stations, the cellular structure shown in FIG. 1a is obtained. The embodiments of the present invention may be implemented based on an existing antenna structure of a base station, and hardware costs of an antenna system are not increased. Certainly, in another cellular networking manner, one set of directional antennas can generate beams in more than two directions, for example, beams in three or four directions. In this case, one set of directional antennas can cover three cells or four cells, which is not limited in the present invention.

In FIG. 1a, two cells are covered by using one set of directional antennas. Certainly, one cell may alternatively be covered by using one set of antennas. To enable one base station to cover six cells (which correspond to seven hexagons), as shown in FIG. 1a, six sets of directional antennas need to be configured, where each set of directional antennas points to one cell, and each set of directional antennas covers a range of 60°. One set of directional antennas generates a beam in one direction to cover one cell, so as to obtain a cellular networking structure with one base station and six cells.

It should be further noted that, in FIG. 1a, any two neighboring cells in six cells of one base station correspond to different carriers, where three cells with a relatively deep color correspond to one carrier, and the other three cells with a relatively light color correspond to another carrier. That is, in the cellular networking, inter-frequency six-sector networking is implemented (a sector is considered as a cell in FIG. 1a).

FIG. 1b is a public network networking structure according to some embodiments of the present invention. In FIG. 1b, a base station may use one or more sets of omni-directional antennas to implement cell coverage, or may use one or more sets of directional antennas to implement cell coverage. In 1b, a description is provided by using an example in which two cells are implemented by using one set of directional antennas, that is, one set of directional antennas is configured for one base station, and one set of directional antennas points to two cells, which are respectively a cell 1 and a cell 2. One set of directional antennas generates beams in two directions, where a beam in one direction covers the cell 1, and a beam in the other direction covers the cell 2. It should be noted that, in another embodiment, one set of directional antennas may alternatively generate beams in three directions, four directions, or more than four directions, where the beams correspondingly cover three cells, four cells, and more than four cells. Details are not limited in the present invention.

In FIG. 1b, one set of directional antennas generates beams in two directions, where one beam covers the cell 1, and the other beam covers the cell 2. Certainly, one set of directional antennas may alternatively generate a beam in one direction, and then in FIG. 1b, two sets of directional antennas need to be configured for the base station. One set of directional antennas generates a beam in one direction, where the beam covers the cell 1, and the other set of directional antennas generates a beam in the other direction, where the beam covers the cell 2.

Certainly, in FIG. 1b, the coverage may alternatively be implemented by two base stations, for example, a base station 1 and a base station 2. One set of directional antennas is configured for the base station 1, and a beam in one direction is generated to cover the cell 1. Another set of directional antennas is configured for the base station 2, and a beam in another direction is generated to cover the cell 2.

Based on the two networking structures provided in FIG. 1a and FIG. 1b, an embodiment of the present invention provides a carrier aggregation implementation method on multiple carriers, so as to increase a service capacity in a carrier aggregation manner, and increase utilization of a carrier resource. The following describes the technical solutions of the present invention in detail with reference to specific embodiments.

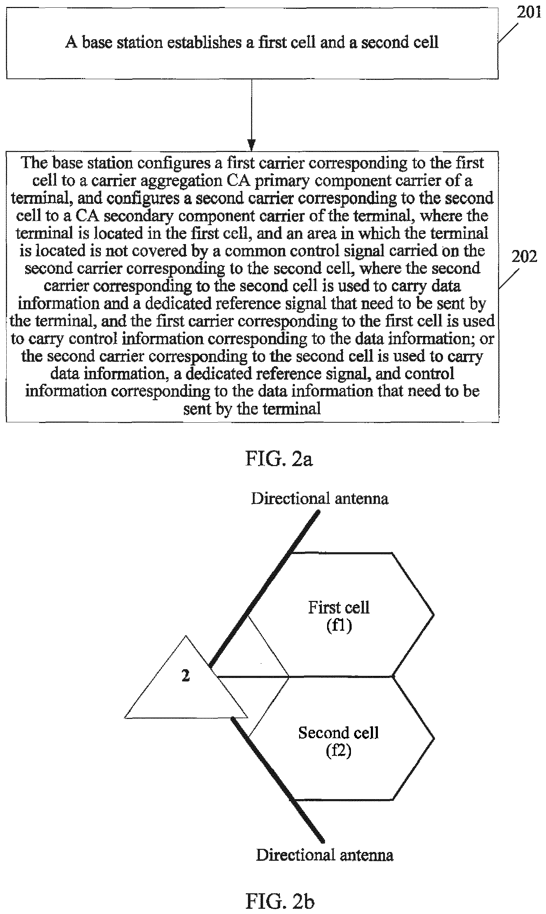

Referring to FIG. 2a and FIG. 2b, FIG. 2a is a schematic flowchart of a carrier aggregation implementation method on multiple carriers according to an embodiment of the present invention; and FIG. 2b is a partial schematic structural diagram of a cellular networking structure according to an embodiment of the present invention. As shown in FIG. 2a, the carrier aggregation implementation method on multiple carriers may include:
201: A base station establishes a first cell and a second cell.

In this embodiment of the present invention, one base station establishes the first cell and the second cell, which may be specifically the cellular networking structure shown in FIG. 1a or the public network networking structure shown in FIG. 1b. For the cellular networking structure shown in FIG. 1a, an implementation manner in which one base station implements two cells in FIG. 1a may be used for implementation; and for the public network networking structure shown in FIG. 1b, an implementation manner in which one base station implements two cells in FIG. 1b may be used for implementation.

For the cellular networking structure shown in FIG. 1a, as shown in FIG. 2b, the base station is indicated by using a triangle in which "2" in the figure is located. Beams in two directions are generated by using one set of directional antennas or two sets of directional antennas (in FIG. 2b, an example in which two sets of directional antennas are marked is used), where a beam in one direction covers the first cell, and a beam in the other direction covers the second cell. A first carrier (such as f1 in FIG. 2b) is configured for the first cell, and a second carrier (such as f2 in FIG. 2b) is configured for the second cell. For example, when the public network networking shown in FIG. 1b is used, one base station may generate beams in two directions by using one set of directional antennas or two sets of directional antennas, where a beam in one direction covers the cell 1, and a beam in the other direction covers the cell 2. The cell 1 is used as the first cell in this embodiment of the present invention, and the cell 2 is used as the second cell in this embodiment of the present invention. The first carrier is configured for the first cell, and the second carrier is configured for the second cell.

Regardless of FIG. 2b or FIG. 1b, when a beam in one direction covers the first cell, the beam in the direction sends a common control signal on the first carrier, to cover the first cell. Similarly, when a beam in the other direction covers the second cell, the beam in the direction sends a common control signal on the second carrier, to cover the second cell. It may be understood that, when the base station generates beams in two directions by using one set of directional antennas or two sets of directional antennas, different broadcast beam weights are configured specifically. For example, in the first cell, the base station uses one group of broadcast beam weights to enable a directional antenna to generate a beam in one direction, and then sends the common control signal on the first carrier, to cover the first cell. In the second cell, the base station uses another group of broadcast beam weights to enable a directional antenna to generate a beam in the other direction, and then sends the common control signal carried on the second carrier, to cover the second cell.

It should be further noted that, in this embodiment of the present invention, it may further be that, the base station configures first power and/or a first tilt angle for the first cell, and configures second power and/or a second tilt angle for the second cell. Then, the base station sends, by using a directional antenna, a common control signal corresponding to the first power and/or the first tilt angle, to obtain the first cell by means of coverage, and sends, by using a directional antenna, a common control signal corresponding to the second power and/or the second tilt angle, to obtain the second cell by means of coverage. Details are not limited herein.

The common control signal carried on the first carrier covers the first cell, which indicates that a terminal in the first cell may send and receive data by using a control channel on the first carrier (it may be understood that, a data channel and a control channel are carried on a carrier), where the data herein may be data information and control information, and certainly may also send and receive data information and another user dedicated signal by using a data channel on the first carrier. Similarly, the common control signal carried on the second carrier covers the second cell, which indicates that a terminal in the second cell may send and receive data by using a control channel on the second carrier, and certainly may also send and receive data information and another user dedicated signal by using a data channel on the second carrier.

After a different carrier is respectively configured for the first cell and the second cell, when sending and receiving data by using the control channel on the first carrier, the terminal in the first cell is not subject to intra-frequency interference from the control channel on the second carrier. In contrast, when sending and receiving data by using the control channel on the second carrier, the terminal in the second cell is not subject to intra-frequency interference from the control channel on the first carrier.

It should be further noted that, a beam is spatially oriented, or power and/or a tilt angle is configured, so that the first cell is obtained by means of coverage of the common control signal carried on the first carrier, and the second cell is obtained by means of coverage of the common control signal carried on the second carrier, which can reduce an overlapping coverage area between the first cell and the second cell as many as possible, to reduce signal interference at edges of the cells. However, a particular overlapping coverage area between the first cell and the second cell is still allowed. The overlapping coverage area refers to an area that is covered by the common control signal carried on the first carrier corresponding to the first cell and is also covered by the common control signal carried on the second carrier corresponding to the second cell. In other words, a terminal in the overlapping coverage area may send and receive data by using the data channel on the first carrier corresponding to the first cell, and may also send and receive data by using the data channel on the second carrier corresponding to the second cell. In such an application scenario, the terminal in the overlapping coverage area may perform, based on the first carrier corresponding to the first cell, CQI measurement, and sense channel quality of the first cell; and perform, based on the second carrier corresponding to the second cell, CQI measurement, and sense channel quality of the second cell, to select a cell with better channel quality for access, or implement cell handover in the overlapping coverage area.

The following briefly describes formation of the overlapping coverage area. For example, referring to FIG. 2b, a base station transmits beams by using two sets of directional antennas. One set of directional antennas transmits a beam 1, and the other set of directional antennas transmits a beam 2, where both the beam 1 and the beam 2 include a main lobe beam, and a side lobe beam or a null beam. For the first cell (in FIG. 2b, a corresponding carrier is f1), the main lobe beam of the beam 1 sends the common control signal carried on the carrier f1, where coverage of the common control signal forms the first cell. In addition, the side lobe beam or the null beam of the beam 2 sends the common control signal carried on the carrier f2 (which corresponds to the second cell), to cover a partial area of the first cell, where the area is covered by both the common control signal carried on the carrier f1 and the common control signal carried on the carrier f2, so as to form an overlapping coverage area in the first cell. In contrast, for the second cell (which corresponds to the carrier f2 in FIG. 2b), the main lobe beam of the beam 2 sends the common control signal carried on the carrier f2, where coverage of the common control signal forms the second cell. In addition, the side lobe beam or the null beam of the beam 1 sends the common control signal carried on the carrier f1 (which corresponds to the first cell), to cover a partial area of the second cell, where the area is covered by both the common control signal carried on the carrier f2 and the common control signal carried on the carrier f1, so as to form an overlapping coverage area in the second cell. Then, the overlapping coverage area in the first cell and the overlapping coverage area in the second cell are combined to form the overlapping coverage area, provided in this embodiment of the present invention, between the first cell and the second cell.

202: The base station configures a first carrier corresponding to the first cell to a carrier aggregation CA primary component carrier of a terminal, and configures a second carrier corresponding to the second cell to a CA secondary component carrier of the terminal, where the terminal is located in the first cell, and an area in which the terminal is located is not covered by a common control signal carried on the second carrier corresponding to the second cell, where the second carrier corresponding to the second cell is used to carry data information and a dedicated reference signal that need to be sent by the terminal, and the first carrier corresponding to the first cell is used to carry control information corresponding to the data information; or the second carrier corresponding to the second cell is used to carry data information, a dedicated reference signal, and control information corresponding to the data information that need to be sent by the terminal.

It can be seen that, for the terminal (in subsequent content, the terminal is described as a CA terminal) that is located in the first cell and is not covered by the common control signal carried on the second carrier corresponding to the second cell, the base station configures the first carrier corresponding to the first cell to the CA primary component carrier of the CA terminal, and then configures the second carrier corresponding to the second cell to the CA secondary component carrier of the CA terminal. The area in which the CA terminal is located is not covered by the common control signal carried on the second carrier corresponding to the second cell (the CA terminal is not located in the overlapping coverage area described above). In other words, the CA terminal cannot send and receive data by using the control channel on the second carrier corresponding to the second cell, but can send and receive data by using the data channel on the second carrier corresponding to the second cell, where the data herein includes control information and data information. Therefore, data information and a dedicated reference signal of the CA terminal may be carried by using the second carrier corresponding to the second cell (the data information and the dedicated reference signal are carried on the data channel on the second carrier), to fully utilize the second carrier corresponding to the second cell, and increase utilization of a carrier resource. When the data information of the CA terminal is carried by using the second carrier corresponding to the second cell, control information corresponding to the data information may be carried by using the first carrier corresponding to the first cell, or control information corresponding to the data information may be carried by using the second carrier corresponding to the second cell (which herein means that the control information is carried by using the data channel on the second carrier corresponding to the second cell because the CA terminal is not covered by the common control signal carried on the second carrier corresponding to the second cell), so that the control information can be correctly obtained, to complete modulation and encoding on the data information. Finally, when the data information of the CA terminal is carried by using the second carrier corresponding to the second cell, regardless of whether the corresponding control information is carried by using the first carrier corresponding to the first cell, or the corresponding control information is carried by using the data channel on the second carrier corresponding to the second cell, the control channel on the second carrier corresponding to the second cell is not used. In this case, even if the control information is sent for a terminal in the second cell still by using the control channel on the second carrier corresponding to the second cell, intra-frequency interference on the control channel between the first cell and the second cell is not caused.

With reference to the foregoing description, the common control signal provided in this embodiment of the present invention is mainly used to provide a cell measurement reference signal, a broadcast message, or the like to a terminal, to meet requirements for network access of the terminal and data transmission on a control channel. Optionally, the common control signal may include a CRS, PBCH control information, SIB, or the like. The control information is used for modulation and encoding of data information such as MCS information.

Optionally, when the control information corresponding to the data information is carried by using the data channel on the second carrier corresponding to the second cell, the control information may be specifically carried by using an EPDCCH on the data channel on the second carrier. When the control information corresponding to the data information is carried by using the first carrier, the control information may be specifically carried by using a PDCCH on the control channel on the first carrier.

In some embodiments of the present invention, the second carrier corresponding to the second cell is further used to send a user dedicated measurement signal, where the user dedicated measurement signal covers at least the first cell. Then, in this scenario, if the second carrier corresponding to the second cell is used to carry data information sent by the CA terminal, and the user dedicated measurement signal is sent by using the second carrier corresponding to the second cell, because the user dedicated measurement signal covers the first cell, the CA terminal can correctly parse the user dedicated measurement signal, to complete corresponding measurement, thereby implementing a corresponding service. Optionally, the user dedicated measurement signal herein may be a channel state indication reference signal (Channel State Indication RS, CSI-RS for short).

It may be further understood that, in this embodiment of the present invention, the overlapping coverage area between the first cell and the second cell may be further used to perform time-frequency synchronization of the CA terminal on the second carrier. Specifically, when the data information is carried for the CA terminal by using both the first carrier corresponding to the first cell and the second carrier corresponding to the second cell, the CA terminal needs to perform time-frequency synchronization to carry the data information on the first carrier and carry the data information on the second carrier. In this case, synchronization may be implemented by using the common control signal, such as a CRS, carried on the second carrier that corresponds to the second cell and that is in the overlapping coverage area.

It may be further understood that, in this embodiment of the present invention, the second carrier corresponding to the second cell may be used by the CA terminal, or may be used by a terminal in the second cell. Therefore, in this embodiment of the present invention, the base station may further configure an SDM scheduling policy for the second carrier corresponding to the second cell. In the SDM scheduling policy, the base station may schedule, in different space resources, the second carrier corresponding to the second cell, to carry data information and a dedicated reference signal for the CA terminal, and carry data information for the terminal in the second cell.

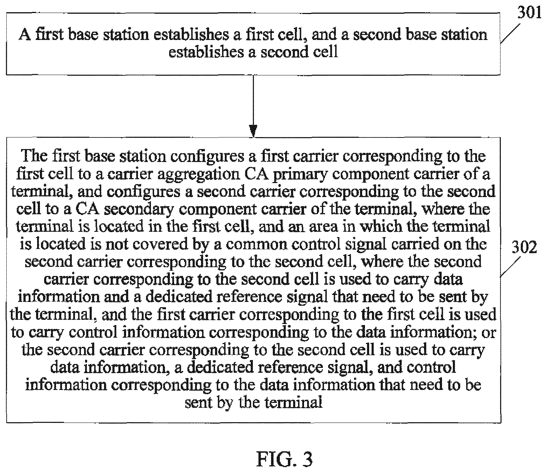

Referring to FIG. 3, FIG. 3 is a schematic flowchart of a carrier aggregation implementation method on multiple carriers according to some other embodiments of the present invention. As shown in FIG. 3, the carrier aggregation implementation method on multiple carriers may include:
301: A first base station establishes a first cell, and a second base station establishes a second cell.

Compared with the embodiment shown in FIG. 2, in this embodiment of the present invention, the first base station may establish the first cell, and then the second base station may establish the second cell. This case is often applied to public network networking, and the public network networking structure shown in FIG. 1b is obtained. The first cell corresponds to a first carrier, and the second cell corresponds to a second carrier.

The first base station may transmit a beam 1 by using one set of directional antennas, where the first cell is obtained by means of coverage of the beam 1. Similarly, the second base station transmits a beam 2 by using another set of directional antennas, where the second cell is obtained by means of coverage of the beam 2. For specific implementation, reference may be made to the detailed description in step 201, and details are not described herein again.

302: The first base station configures a first carrier corresponding to the first cell to a carrier aggregation CA primary component carrier of a terminal, and configures a second carrier corresponding to the second cell to a CA secondary component carrier of the terminal, where the terminal is located in the first cell, and an area in which the terminal is located is not covered by a common control signal carried on the second carrier corresponding to the second cell, where the second carrier corresponding to the second cell is used to carry data information and a dedicated reference signal that need to be sent by the terminal, and the first carrier corresponding to the first cell is used to carry control information corresponding to the data information; or the second carrier corresponding to the second cell is used to carry data information, a dedicated reference signal, and control information corresponding to the data information that need to be sent by the terminal.

In this embodiment of the present invention, the first cell and the second cell are established based on a manner in step 301, and then configuration of the CA terminal is performed based on a manner that is the same as that in step 202, to increase utilization of a carrier resource. For details, reference may be made to the detailed description in step 202, and details are not described herein again.

The first cell and the second cell that are provided in this embodiment of the present invention may be two neighboring cells, for example, may be two neighboring cells that are established by a same base station and that are in a cellular networking structure. It may be understood that, corresponding to two neighboring cells that are of one base station and that are in the cellular networking structure, the terminal that is located in the first cell and is not covered by the common control signal carried on the second carrier corresponding to the second cell is described with reference to FIG. 2b, and then the first cell corresponding to the first cell is configured to the CA primary component carrier of the terminal, and the second carrier corresponding to the second cell is configured to the CA secondary component carrier of the terminal. In contrast, for a terminal that is located in the second cell and is not covered by a common control signal carried on the first carrier corresponding to the first cell, the base station may configure the second carrier corresponding to the second cell to a CA primary component carrier of the terminal, and configure the first carrier corresponding to the first cell to a CA secondary component carrier of the terminal. In other words, in an application scenario in which the first cell and the second cell are neighboring cells, a CA terminal may be configured in both the first cell and the second cell, to schedule a carrier resource, and increase utilization of the carrier resource.

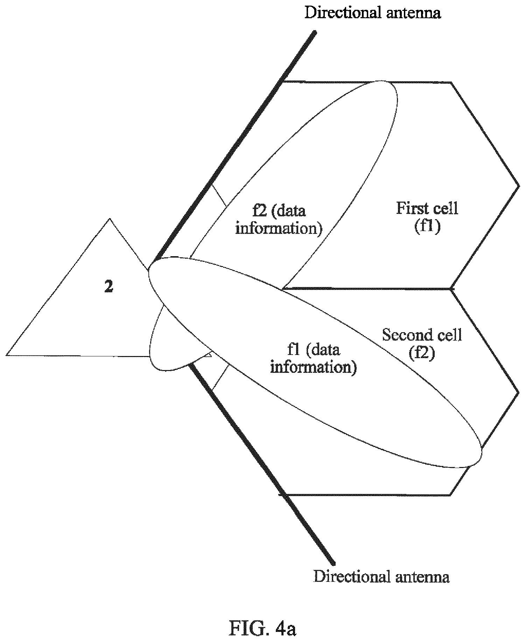

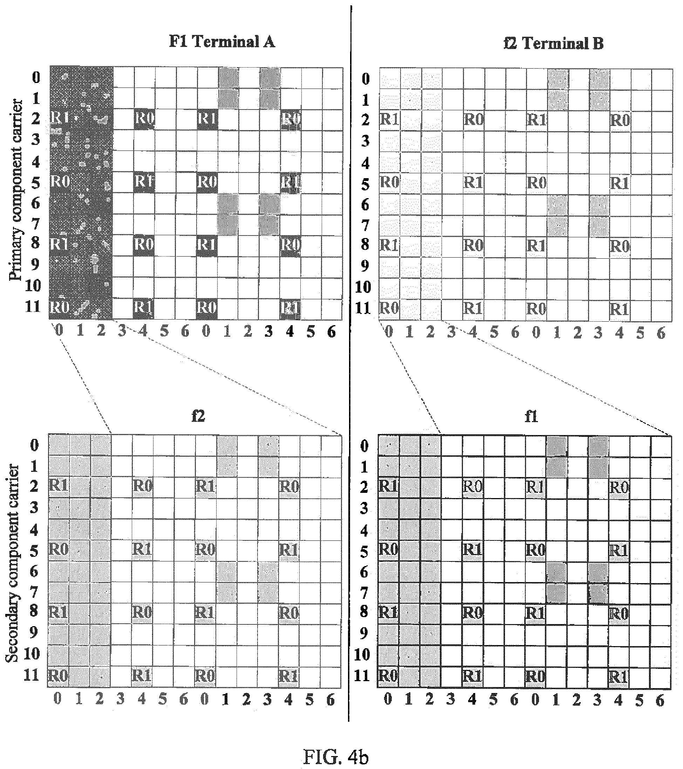

Referring to FIG. 4a and FIG. 4b, FIG. 4a is a schematic application diagram of carrying data information across carriers according to an embodiment of the present invention; and FIG. 4b is a schematic diagram of cross-carrier scheduling according to an embodiment of the present invention. In FIG. 4a, an application in a cellular networking scenario is used as an example. Reference may be made to FIG. 2b. A first cell corresponds to a carrier f1, and a second cell corresponds to a carrier f2. For a terminal A that is located in the first cell, and is not covered by a common control signal carried on f2, a base station configures f1 to a CA primary component carrier of the terminal A, and configures f2 to a CA secondary component carrier of the terminal A. Similarly, for a terminal B located in the second cell, the base station configures f2 to a primary component carrier of the terminal B, and configures f1 to a secondary component carrier of the terminal B.

For the terminal A, data information may be carried by using f2, so as to expand data coverage of f2, such as an ellipse area f2 in FIG. 4a. In this case, control information corresponding to the data information may be carried by using f1, as shown in a left portion (the terminal A) in FIG. 4b. For the terminal B, data information may be carried by using f1, so as to expand data coverage of f1, such as an ellipse area f1 in FIG. 4a. In this case, control information corresponding to the data information may be carried by using f2, as shown in a right portion (the terminal B) in FIG. 4b. When the terminal A carries the data information by using f2, the terminal A carries the corresponding control information by using fl; similarly, when the terminal B carries the data information by using f1, the terminal B carries the corresponding control information by using f2, so that intra-frequency interference on the control channel between the first cell and the second cell is not caused.

In FIG. 4a, in the first cell, the base station configures an SDM scheduling policy for f2; in the second cell, the base station configures an SDM scheduling policy for f1. Therefore, the terminal A and the terminal B can use f1 on different space resources, and similarly, the terminal A and the terminal B can use f2 on different space resources, to implement resource multiplexing.

The first cell and the second cell that are provided in this embodiment of the present invention may alternatively be in an inclusion relationship, which means that the second cell is located in the first cell, that is, an overlapping coverage area between the first cell and the second cell is equal to the second cell, for example, the public network networking shown in FIG. 1b. It may be understood that, in this application scenario, areas in which all terminals in the second cell are located are all covered by the common control signal carried on the first carrier corresponding to the first cell. Therefore, CA configuration can be performed only for a terminal in the first cell.

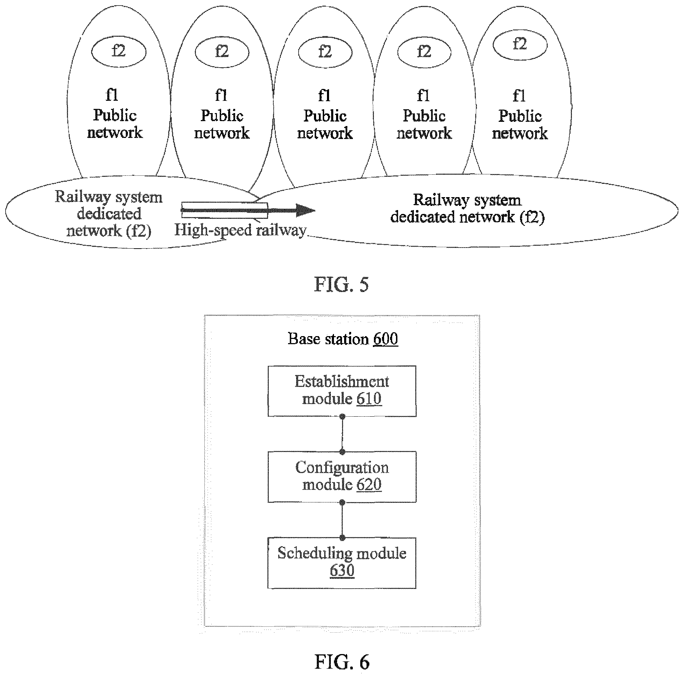

Referring to FIG. 5, FIG. 5 is a schematic application diagram of a carrier aggregation implementation method on multiple carriers according to an embodiment of the present invention. In FIG. 5, the public network networking provided in this embodiment of the present invention shown in FIG. 1b is used in combination with a dedicated network, where the dedicated network refers to a network for exclusive use, for example, a railway system dedicated network, a public security dedicated network, a flood control dedicated network, or a military dedicated network, and the dedicated network is only an internal network of a system, and services only the system. In FIG. 5, a description is provided specifically by using the railway system dedicated network as an example.

First, the technical solutions of the present invention are implemented on a public network. As shown in FIG. 5, a base station establishes a first cell and a second cell, where the first cell corresponds to f1, and the second cell corresponds to f2. For a CA terminal in the first cell, f1 is configured to a primary component carrier of the CA terminal, and f2 is configured to a secondary component carrier of the CA terminal. The base station in which the railway system dedicated network is located further establishes a third cell, where the third cell corresponds to f2, and there is no overlapping coverage area between the second cell and the third cell. When data is carried on f2 corresponding to the second cell for a terminal in the second cell, and data is carried on f2 corresponding to the third cell for a terminal in the third cell, interference (which includes interference on a data channel and a control channel) between the second cell and the third cell is not caused. Further, in this scenario, an area in which the CA terminal is located is not covered by a common control signal carried on f2 corresponding to the second cell, and is not in an overlapping coverage area between the first cell and the third cell. Therefore, when data information and a dedicated reference signal are carried for the CA terminal by using f2 corresponding to the second cell, data may also be carried for the terminal in the third cell by using on f2 corresponding to the third cell, so that when the CA terminal uses f2 corresponding to the second cell and the terminal in the third cell uses f2 corresponding to the third cell, signal interference is not caused. When another base station does not use f2 corresponding to the third cell, a first base station may invoke f2 corresponding to the second cell, to carry data for a CA terminal located in the overlapping coverage area between the first cell and the third cell. Specifically, based on a time-division multiplexing mode, the CA terminal in the overlapping coverage area between the first cell and the third cell uses f2 corresponding to the second cell, and the terminal in the third cell uses f2 corresponding to the third cell. In other words, after a high-speed railway passes through the overlapping coverage area between the first cell and the third cell, a base station in the public network may service the CA terminal in the overlapping coverage area between the first cell and the third cell again by using f2 corresponding to the second cell.

Referring to FIG. 6, FIG. 6 is a schematic structural diagram of a base station according to some embodiments of the present invention. As shown in FIG. 6, the base station 600 may include:
an establishment module 610, configured to establish a first cell and a second cell; and
a configuration module 620, configured to: configure a first carrier corresponding to the first cell to a carrier aggregation CA primary component carrier of a terminal, and configure a second carrier corresponding to the second cell to a CA secondary component carrier of the terminal, where the terminal is located in the first cell, and an area in which the terminal is located is not covered by a common control signal carried on the second carrier corresponding to the second cell, where
the second carrier corresponding to the second cell is used to carry data information and a dedicated reference signal that need to be sent by the terminal, and the first carrier corresponding to the first cell is used to carry control information corresponding to the data information; or
the second carrier corresponding to the second cell is used to carry data information, a dedicated reference signal, and control information corresponding to the data information that need to be sent by the terminal.

Optionally, in some implementable manners of the present invention, the establishment module 610 may be specifically configured to transmit a first beam and a second beam by using an antenna, where the first beam is used to send a common control signal carried on the first carrier corresponding to the first cell, and coverage of the common control signal carried on the first carrier corresponding to the first cell forms the first cell; and the second beam is used to send the common control signal carried on the second carrier corresponding to the second cell, and coverage of the common control signal carried on the second carrier corresponding to the second cell forms the second cell.

Optionally, in some implementable manners of the present invention, the base station 600 further includes a scheduling module 630, where the scheduling module 630 is configured to: schedule, in different space, the second carrier corresponding to the second cell, use the second carrier corresponding to the second cell to carry the data information and the dedicated reference signal for the terminal, and use the second carrier corresponding to the second cell to carry data information for a terminal covered by the second carrier corresponding to the second cell.

Optionally, in some implementable manners of the present invention, the second carrier corresponding to the second cell is further used to send a user dedicated measurement signal, where the user dedicated measurement signal covers at least the first cell.

Optionally, in some implementable manners of the present invention, the common control signal includes a common reference signal CRS, physical broadcast channel PBCH control information, and system broadcast information SIB.

Optionally, in some implementable manners of the present invention, if another base station other than the base station establishes a third cell, the third cell configures a second carrier, there is an overlapping coverage area between the second cell and the first cell, there is no overlapping coverage area between the second cell and the third cell, and the area in which the terminal is located is not located in the overlapping coverage area between the first cell and the second cell and is not located in an overlapping coverage area between the first cell and the third cell, when the another base station does not schedule the second carrier corresponding to the third cell, the scheduling module 630 is further configured to schedule the second carrier corresponding to the second cell.

It can be seen that, in the embodiments of the present invention, the establishment module 610 in the base station 600 establishes the first cell and the second cell; and the configuration module 620 configures the first carrier corresponding to the first cell to the carrier aggregation CA primary component carrier of the terminal (which is described as a CA terminal in the embodiments of the present invention), and configures the second carrier corresponding to the second cell to the CA secondary component carrier of the terminal, where the terminal is located in the first cell, and the area in which the terminal is located is not covered by the common control signal carried on the second carrier corresponding to the second cell, where the second carrier corresponding to the second cell is used to carry the data information and the dedicated reference signal that need to be sent by the terminal, and the first carrier corresponding to the first cell is used to carry the control information corresponding to the data information; or the second carrier corresponding to the second cell is used to carry the data information, the dedicated reference signal, and the control information corresponding to the data information that need to be sent by the terminal. In other words, the CA terminal cannot send and receive data by using a control channel on the second carrier corresponding to the second cell, but can send and receive data by using a data channel on the second carrier corresponding to the second cell, where the data herein includes control information and data information. Therefore, data information and a dedicated reference signal of the CA terminal may be carried by using the second carrier corresponding to the second cell (the data information and the dedicated reference signal are carried on the data channel on the second carrier), to fully utilize the second carrier corresponding to the second cell, and increase utilization of a carrier resource. When the data information of the CA terminal is carried by using the second carrier corresponding to the second cell, control information corresponding to the data information may be carried by using the first carrier corresponding to the first cell, or control information corresponding to the data information may be carried by using the second carrier corresponding to the second cell (which herein means that the control information is carried by using the data channel on the second carrier corresponding to the second cell because the CA terminal is not covered by the common control signal carried on the second carrier corresponding to the second cell), so that the control information can be correctly obtained, to complete modulation and encoding on the data information. Finally, when the data information of the CA terminal is carried by using the second carrier corresponding to the second cell, regardless of whether the corresponding control information is carried by using the first carrier corresponding to the first cell, or the corresponding control information is carried by using the data channel on the second carrier corresponding to the second cell, the control channel on the second carrier corresponding to the second cell is not used. In this case, even if the control information is sent for a terminal in the second cell still by using the control channel on the second carrier corresponding to the second cell, intra-frequency interference on the control channel between the first cell and the second cell is not caused.

It may be understood that, functions of functional modules of the base station 600 in the embodiments may be specifically implemented according to the method in the foregoing method embodiments. For a specific implementation process thereof, reference may be made to related descriptions in the foregoing method embodiments, and details are not described herein again.

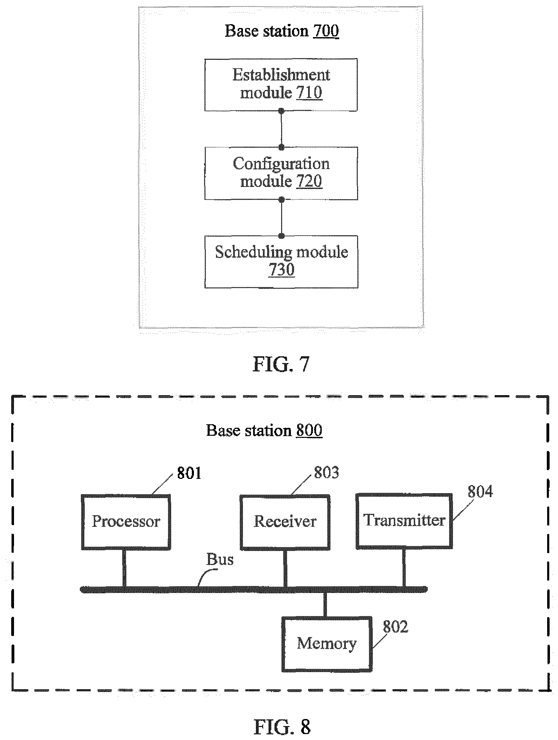

Referring to FIG. 7, FIG. 7 is a schematic structural diagram of a base station according to some other embodiments of the present invention. As shown in FIG. 7, the base station 700 may include:
an establishment module 710, configured to establish a first cell; and
a configuration module 720, configured to: configure a first carrier corresponding to the first cell to a carrier aggregation CA primary component carrier of a terminal, and configure a second carrier corresponding to a second cell to a CA secondary component carrier of the terminal, where the second cell is established by a second base station, the terminal is located in the first cell, and an area in which the terminal is located is not covered by a common control signal carried on the second carrier corresponding to the second cell, where
the second carrier corresponding to the second cell is used to carry data information and a dedicated reference signal that need to be sent by the terminal, and the first carrier corresponding to the first cell is used to carry control information corresponding to the data information; or
the second carrier corresponding to the second cell is used to carry data information, a dedicated reference signal, and control information corresponding to the data information that need to be sent by the terminal.

Optionally, in some possible embodiments of the present invention, the establishment module 710 is specifically configured to transmit a first beam by using an antenna, where the first beam is used to send a common control signal carried on the first carrier corresponding to the first cell, and coverage of the common control signal carried on the first carrier corresponding to the first cell forms the first cell.

Optionally, in some possible embodiments of the present invention, the second carrier corresponding to the second cell is further used to send a user dedicated measurement signal, where the user dedicated measurement signal covers at least the first cell.

Optionally, in some possible embodiments of the present invention, the common control signal includes a common reference signal CRS, physical broadcast channel PBCH control information, and system broadcast information SIB.

Optionally, in some possible embodiments of the present invention, the base station 700 further includes a scheduling module 730, configured to: schedule, in different space, the second carrier corresponding to the second cell, use the second carrier corresponding to the second cell to carry the data information and the dedicated reference signal for the terminal, and use the second carrier corresponding to the second cell to carry data information for a terminal covered by the second carrier corresponding to the second cell.

Optionally, in some possible embodiments of the present invention, if a third base station establishes a third cell, the third cell configures a second carrier, there is an overlapping coverage area between the second cell and the first cell, there is no overlapping coverage area between the second cell and the third cell, and the area in which the terminal is located is not located in the overlapping coverage area between the first cell and the second cell and is not located in an overlapping coverage area between the first cell and the third cell, when the third base station does not schedule the second carrier corresponding to the third cell, the scheduling module 730 is further configured to schedule the second carrier corresponding to the second cell.

It may be understood that, functions of functional modules of the base station 700 in the embodiments may be specifically implemented according to the method in the foregoing method embodiments. For a specific implementation process thereof, reference may be made to related descriptions in the foregoing method embodiments, and details are not described herein again.

Referring to FIG. 8, FIG. 8 is another schematic structural diagram of a base station according to an embodiment of the present invention, where the base station 800 may include at least one processor 801 (such as a CPU, Central Processing Unit), at least one network interface or another communications interface, a memory 802, a receiver 803, a transmitter 804, and at least one communications bus, which is configured to implement a connection and communication between these apparatuses. The processor 801 is configured to execute an executable module stored in the memory 802, for example, a computer program instruction. The memory 802 may include a high-speed random access memory (RAM, Random Access Memory), or may further include a non-volatile memory (non-volatile memory), for example, at least one magnetic disk memory. A communication connection between the system gateway and at least one another network element is implemented by using at least one network interface (which may be wired or wireless), and the Internet, a wide area network, a local network, a metropolitan area network, and the like may be used.

As shown in FIG. 8, in some implementation manners, a program instruction is stored in the memory 802, the program instruction may be executed by the processor 801, and the processor 801 specifically performs the following steps: establishing a first cell and a second cell; and configuring a first carrier corresponding to the first cell to a carrier aggregation CA primary component carrier of a terminal, and configuring a second carrier corresponding to the second cell to a CA secondary component carrier of the terminal, where the terminal is located in the first cell, and an area in which the terminal is located is not covered by a common control signal carried on the second carrier corresponding to the second cell, where
the second carrier corresponding to the second cell is used to carry data information and a dedicated reference signal that need to be sent by the terminal, and the first carrier corresponding to the first cell is used to carry control information corresponding to the data information; or the second carrier corresponding to the second cell is used to carry data information, a dedicated reference signal, and control information corresponding to the data information that need to be sent by the terminal.

In some implementation manners, the processor 801 may further perform the following step: transmitting a first beam and a second beam by using an antenna, where the first beam is used to send a common control signal carried on the first carrier corresponding to the first cell, and coverage of the common control signal carried on the first carrier corresponding to the first cell forms the first cell; and the second beam is used to send the common control signal carried on the second carrier corresponding to the second cell, and coverage of the common control signal carried on the second carrier corresponding to the second cell forms the second cell.

In some implementation manners, the processor 801 may further perform the following steps: scheduling, in different space, the second carrier corresponding to the second cell, using the second carrier corresponding to the second cell to carry the data information and the dedicated reference signal for the terminal, and using the second carrier corresponding to the second cell to carry data information for a terminal covered by the second carrier corresponding to the second cell.

In some implementation manners, if another base station other than the base station establishes a third cell, the third cell configures a second carrier, there is an overlapping coverage area between the second cell and the first cell, there is no overlapping coverage area between the second cell and the third cell, and the area in which the terminal is located is not located in the overlapping coverage area between the first cell and the second cell and is not located in an overlapping coverage area between the first cell and the third cell, when the another base station does not schedule the second carrier corresponding to the third cell, the processor 801 may further perform the following step: scheduling the second carrier corresponding to the second cell.

It may be understood that, functions of functional modules of the base station 800 in this embodiment may be specifically implemented according to the method in the foregoing method embodiments. For a specific implementation process thereof, reference may be made to related descriptions in the foregoing method embodiments, and details are not described herein again.

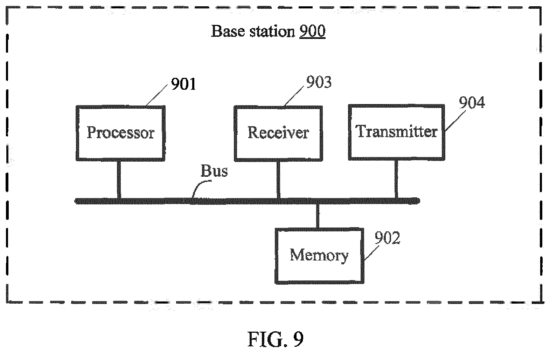

Referring to FIG. 9, FIG. 9 is another schematic structural diagram of a base station according to an embodiment of the present invention, where the base station 900 may include at least one processor 901 (such as a CPU), at least one network interface or another communications interface, a memory 902, a receiver 903, a transmitter 904, and at least one communications bus, which is configured to implement a connection and communication between these apparatuses. The processor 901 is configured to execute an executable module stored in the memory 902, for example, a computer program instruction. The memory 802 may include a high-speed random access memory (RAM), or may further include a non-volatile memory (non-volatile memory), for example, at least one magnetic disk memory. A communication connection between the system gateway and at least one another network element is implemented by using at least one network interface (which may be wired or wireless), and the Internet, a wide area network, a local network, a metropolitan area network, and the like may be used.

As shown in FIG. 9, in some implementation manners, a program instruction is stored in the memory 902, the program instruction may be executed by the processor 901, and the processor 901 specifically performs the following steps: establishing a first cell; and configuring a first carrier corresponding to the first cell to a carrier aggregation CA primary component carrier of a terminal, and configuring a second carrier corresponding to the second cell to a CA secondary component carrier of the terminal, where the second cell is established by a second base station, the terminal is located in the first cell, and an area in which the terminal is located is not covered by a common control signal carried on the second carrier corresponding to the second cell, where
the second carrier corresponding to the second cell is used to carry data information and a dedicated reference signal that need to be sent by the terminal, and the first carrier corresponding to the first cell is used to carry control information corresponding to the data information; or the second carrier corresponding to the second cell is used to carry data information, a dedicated reference signal, and control information corresponding to the data information that need to be sent by the terminal.

In some implementation manners, the processor 901 may further perform the following step: transmitting a first beam by using an antenna, where the first beam is used to send a common control signal carried on the first carrier corresponding to the first cell, and coverage of the common control signal carried on the first carrier corresponding to the first cell forms the first cell.

In some implementation manners, the processor 901 may further perform the following steps: scheduling, in different space, the second carrier corresponding to the second cell, using the second carrier corresponding to the second cell to carry the data information and the dedicated reference signal for the terminal, and using the second carrier corresponding to the second cell to carry data information for a terminal covered by the second carrier corresponding to the second cell.

In some implementation manners, if a third base station establishes a third cell, the third cell configures a second carrier, there is an overlapping coverage area between the second cell and the first cell, there is no overlapping coverage area between the second cell and the third cell, and the area in which the terminal is located is not located in the overlapping coverage area between the first cell and the second cell and is not located in an overlapping coverage area between the first cell and the third cell, when the third base station does not schedule the second carrier corresponding to the third cell, the processor 901 may further perform the following step: scheduling the second carrier corresponding to the second cell.

Optionally, in some embodiments of the present invention, the second carrier corresponding to the second cell is further used to send a user dedicated measurement signal, where the user dedicated measurement signal covers at least the first cell.

Optionally, in some embodiments of the present invention, the common control signal includes a common reference signal CRS, physical broadcast channel PBCH control information, and system broadcast information SIB.

It may be understood that, functions of functional modules of the base station 900 in this embodiment may be specifically implemented according to the method in the foregoing method embodiments. For a specific implementation process thereof, reference may be made to related descriptions in the foregoing method embodiments, and details are not described herein again.

In the foregoing embodiments, the descriptions of the embodiments have respective emphases. For a part that is not described in detail in an embodiment, reference may be made to related descriptions in other embodiments.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing describes in detail the carrier aggregation implementation method on multiple carriers and the base station that are provided in the present invention. A person of ordinary skill in the art may make variations and modifications in terms of the specific implementation manners and application scopes according to the ideas of the embodiments of the present invention. In summary, the content of the specification should not be construed as a limitation on the present invention.

## Claims

1. A carrier aggregation implementation method on multiple carriers, comprising:
establishing, by a base station, a first cell and a second cell; and
configuring, by the base station, a first carrier corresponding to the first cell to a carrier aggregation CA primary component carrier of a terminal, and configuring a second carrier corresponding to the second cell to a CA secondary component carrier of the terminal, wherein the terminal is located in the first cell, and an area in which the terminal is located is not covered by a common control signal carried on the second carrier corresponding to the second cell, wherein
the second carrier corresponding to the second cell is used to carry data information and a dedicated reference signal that need to be sent by the terminal, and the first carrier corresponding to the first cell is used to carry control information corresponding to the data information; or
the second carrier corresponding to the second cell is used to carry data information, a dedicated reference signal, and control information corresponding to the data information that need to be sent by the terminal.

2. The method according to claim 1, wherein the establishing, by a base station, a first cell and a second cell comprises:
transmitting, by the base station, a first beam and a second beam by using an antenna, wherein the first beam is used to send a common control signal carried on the first carrier corresponding to the first cell, and coverage of the common control signal carried on the first carrier corresponding to the first cell forms the first cell; and the second beam is used to send the common control signal carried on the second carrier corresponding to the second cell, and coverage of the common control signal carried on the second carrier corresponding to the second cell forms the second cell.

3. The method according to claim 1 or 2, wherein
the base station schedules, in different space, the second carrier corresponding to the second cell, uses the second carrier corresponding to the second cell to carry the data information and the dedicated reference signal for the terminal, and uses the second carrier corresponding to the second cell to carry data information for a terminal covered by the second carrier corresponding to the second cell.

4. The method according to any one of claims 1 to 3, wherein the second carrier corresponding to the second cell is further used to send a user dedicated measurement signal, wherein the user dedicated measurement signal covers at least the first cell.

5. The method according to any one of claims 1 to 4, wherein the common control signal comprises a common reference signal CRS, physical broadcast channel PBCH control information, and system broadcast information SIB.

6. The method according to any one of claims 1 to 5, wherein if another base station other than the base station establishes a third cell, the third cell configures a second carrier, there is an overlapping coverage area between the second cell and the first cell, there is no overlapping coverage area between the second cell and the third cell, and the area in which the terminal is located is not located in the overlapping coverage area between the first cell and the second cell and is not located in an overlapping coverage area between the first cell and the third cell, when the another base station does not schedule the second carrier corresponding to the third cell, the base station schedules the second carrier corresponding to the second cell.

7. A carrier aggregation implementation method on multiple carriers, comprising:
establishing, by a first base station, a first cell; and
configuring, by the first base station, a first carrier corresponding to the first cell to a carrier aggregation CA primary component carrier of a terminal, and configuring a second carrier corresponding to a second cell to a CA secondary component carrier of the terminal, wherein the second cell is established by a second base station, the terminal is located in the first cell, and an area in which the terminal is located is not covered by a common control signal carried on the second carrier corresponding to the second cell, wherein
the second carrier corresponding to the second cell is used to carry data information and a dedicated reference signal that need to be sent by the terminal, and the first carrier corresponding to the first cell is used to carry control information corresponding to the data information; or
the second carrier corresponding to the second cell is used to carry data information, a dedicated reference signal, and control information corresponding to the data information that need to be sent by the terminal.

8. The method according to claim 7, wherein the establishing, by a first base station, a first cell comprises:
transmitting, by the first base station, a first beam by using an antenna, wherein the first beam is used to send a common control signal carried on the first carrier corresponding to the first cell, and coverage of the common control signal carried on the first carrier corresponding to the first cell forms the first cell.

9. The method according to claim 7 or 8, wherein the establishing, by a second base station, the second cell comprises:
transmitting, by the second base station, a second beam by using an antenna, wherein the second beam is used to send the common control signal carried on the second carrier corresponding to the second cell, and coverage of the common control signal carried on the second carrier corresponding to the second cell forms the second cell.

10. The method according to any one of claims 7 to 9, wherein
the second carrier corresponding to the second cell is further used to send a user dedicated measurement signal, wherein the user dedicated measurement signal covers at least the first cell.

11. The method according to any one of claims 7 to 10, wherein the common control signal comprises a common reference signal CRS, physical broadcast channel PBCH control information, and system broadcast information SIB.

12. The method according to any one of claims 7 to 10, wherein
the first base station schedules, in different space, the second carrier corresponding to the second cell, uses the second carrier corresponding to the second cell to carry the data information and the dedicated reference signal for the terminal, and uses the second carrier corresponding to the second cell to carry data information for a terminal covered by the second carrier corresponding to the second cell.

13. The method according to any one of claims 7 to 12, wherein if a third base station establishes a third cell, the third cell configures a second carrier, there is an overlapping coverage area between the second cell and the first cell, there is no overlapping coverage area between the second cell and the third cell, and the area in which the terminal is located is not located in the overlapping coverage area between the first cell and the second cell and is not located in an overlapping coverage area between the first cell and the third cell, when the third base station does not schedule the second carrier corresponding to the third cell, the first base station schedules the second carrier corresponding to the second cell.

14. Abase station, comprising:
an establishment module, configured to establish a first cell and a second cell; and
a configuration module, configured to: configure a first carrier corresponding to the first cell to a carrier aggregation CA primary component carrier of a terminal, and configure a second carrier corresponding to the second cell to a CA secondary component carrier of the terminal, wherein the terminal is located in the first cell, and an area in which the terminal is located is not covered by a common control signal carried on the second carrier corresponding to the second cell, wherein
the second carrier corresponding to the second cell is used to carry data information and a dedicated reference signal that need to be sent by the terminal, and the first carrier corresponding to the first cell is used to carry control information corresponding to the data information; or
the second carrier corresponding to the second cell is used to carry data information, a dedicated reference signal, and control information corresponding to the data information that need to be sent by the terminal.

15. The base station according to claim 14, wherein
the establishment module is specifically configured to transmit a first beam and a second beam by using an antenna, wherein the first beam is used to send a common control signal carried on the first carrier corresponding to the first cell, and coverage of the common control signal carried on the first carrier corresponding to the first cell forms the first cell; and the second beam is used to send the common control signal carried on the second carrier corresponding to the second cell, and coverage of the common control signal carried on the second carrier corresponding to the second cell forms the second cell.

16. The base station according to claim 14 or 15, wherein the base station further comprises:
a scheduling module, configured to: schedule, in different space, the second carrier corresponding to the second cell, use the second carrier corresponding to the second cell to carry the data information and the dedicated reference signal for the terminal, and use the second carrier corresponding to the second cell to carry data information for a terminal covered by the second carrier corresponding to the second cell.

17. The base station according to any one of claims 14 to 16, wherein
the second carrier corresponding to the second cell is further used to send a user dedicated measurement signal, wherein the user dedicated measurement signal covers at least the first cell.

18. The base station according to any one of claims 14 to 17, wherein
the common control signal comprises a common reference signal CRS, physical broadcast channel PBCH control information, and system broadcast information SIB.

19. The base station according to any one of claims 16 to 18, wherein
if another base station other than the base station establishes a third cell, the third cell configures a second carrier, there is an overlapping coverage area between the second cell and the first cell, there is no overlapping coverage area between the second cell and the third cell, and the area in which the terminal is located is not located in the overlapping coverage area between the first cell and the second cell and is not located in an overlapping coverage area between the first cell and the third cell, when the another base station does not schedule the second carrier corresponding to the third cell, the scheduling module is further configured to schedule the second carrier corresponding to the second cell.

20. A base station, comprising:
an establishment module, configured to establish a first cell; and
a configuration module, configured to: configure a first carrier corresponding to the first cell to a carrier aggregation CA primary component carrier of a terminal, and configure a second carrier corresponding to a second cell to a CA secondary component carrier of the terminal, wherein the second cell is established by a second base station, the terminal is located in the first cell, and an area in which the terminal is located is not covered by a common control signal carried on the second carrier corresponding to the second cell, wherein
the second carrier corresponding to the second cell is used to carry data information and a dedicated reference signal that need to be sent by the terminal, and the first carrier corresponding to the first cell is used to carry control information corresponding to the data information; or
the second carrier corresponding to the second cell is used to carry data information, a dedicated reference signal, and control information corresponding to the data information that need to be sent by the terminal.

21. The base station according to claim 20, wherein
the establishment module is specifically configured to transmit a first beam by using an antenna, wherein the first beam is used to send a common control signal carried on the first carrier corresponding to the first cell, and coverage of the common control signal carried on the first carrier corresponding to the first cell forms the first cell.

22. The base station according to claim 20 or 21, wherein
the second carrier corresponding to the second cell is further used to send a user dedicated measurement signal, wherein the user dedicated measurement signal covers at least the first cell.

23. The base station according to any one of claims 20 to 22, wherein
the common control signal comprises a common reference signal CRS, physical broadcast channel PBCH control information, and system broadcast information SIB.

24. The base station according to any one of claims 20 to 23, wherein the base station further comprises:
a scheduling module, configured to: schedule, in different space, the second carrier corresponding to the second cell, use the second carrier corresponding to the second cell to carry the data information and the dedicated reference signal for the terminal, and use the second carrier corresponding to the second cell to carry data information for a terminal covered by the second carrier corresponding to the second cell.

25. The base station according to claim 24, wherein if a third base station establishes a third cell, the third cell configures a second carrier, there is an overlapping coverage area between the second cell and the first cell, there is no overlapping coverage area between the second cell and the third cell, and the area in which the terminal is located is not located in the overlapping coverage area between the first cell and the second cell and is not located in an overlapping coverage area between the first cell and the third cell, when the third base station does not schedule the second carrier corresponding to the third cell, the scheduling module is further configured to schedule the second carrier corresponding to the second cell.

26. Abase station, comprising:
a receiver, a transmitter, a memory, and a processor that are connected by using a bus, wherein
the memory is configured to store a program instruction;
the processor is configured to execute the program instruction stored in the memory; and
the processor is further configured to: establish a first cell and a second cell; and configure a first carrier corresponding to the first cell to a carrier aggregation CA primary component carrier of a terminal, and configure a second carrier corresponding to the second cell to a CA secondary component carrier of the terminal, wherein the terminal is located in the first cell, and an area in which the terminal is located is not covered by a common control signal carried on the second carrier corresponding to the second cell, wherein
the second carrier corresponding to the second cell is used to carry data information and a dedicated reference signal that need to be sent by the terminal, and the first carrier corresponding to the first cell is used to carry control information corresponding to the data information; or
the second carrier corresponding to the second cell is used to carry data information, a dedicated reference signal, and control information corresponding to the data information that need to be sent by the terminal.

27. The base station according to claim 26, wherein
the processor is specifically configured to transmit a first beam and a second beam by using an antenna, wherein the first beam is used to send a common control signal carried on the first carrier corresponding to the first cell, and coverage of the common control signal carried on the first carrier corresponding to the first cell forms the first cell; and the second beam is used to send the common control signal carried on the second carrier corresponding to the second cell, and coverage of the common control signal carried on the second carrier corresponding to the second cell forms the second cell.

28. The base station according to claim 26 or 27, wherein
the processor is further configured to: schedule, in different space, the second carrier corresponding to the second cell, use the second carrier corresponding to the second cell to carry the data information and the dedicated reference signal for the terminal, and use the second carrier corresponding to the second cell to carry data information for a terminal covered by the second carrier corresponding to the second cell.

29. The base station according to any one of claims 26 to 28, wherein
the second carrier corresponding to the second cell is further used to send a user dedicated measurement signal, wherein the user dedicated measurement signal covers at least the first cell.

30. The base station according to any one of claims 26 to 29, wherein the common control signal comprises a common reference signal CRS, physical broadcast channel PBCH control information, and system broadcast information SIB.

31. The base station according to any one of claims 26 to 30, wherein if another base station other than the base station establishes a third cell, the third cell configures a second carrier, there is an overlapping coverage area between the second cell and the first cell, there is no overlapping coverage area between the second cell and the third cell, and the area in which the terminal is located is not located in the overlapping coverage area between the first cell and the second cell and is not located in an overlapping coverage area between the first cell and the third cell, when the another base station does not schedule the second carrier corresponding to the third cell, the processor is further configured to schedule the second carrier corresponding to the second cell.

32. A base station, comprising:
a receiver, a transmitter, a memory, and a processor that are connected by using a bus, wherein the memory is configured to store a program instruction;
the processor is configured to execute the program instruction stored in the memory; and
the processor is further configured to: establish a first cell; and configure a first carrier corresponding to the first cell to a carrier aggregation CA primary component carrier of a terminal, and configure a second carrier corresponding to a second cell to a CA secondary component carrier of the terminal, wherein the second cell is established by a second base station, the terminal is located in the first cell, and an area in which the terminal is located is not covered by a common control signal carried on the second carrier corresponding to the second cell, wherein
the second carrier corresponding to the second cell is used to carry data information and a dedicated reference signal that need to be sent by the terminal, and the first carrier corresponding to the first cell is used to carry control information corresponding to the data information; or
the second carrier corresponding to the second cell is used to carry data information, a dedicated reference signal, and control information corresponding to the data information that need to be sent by the terminal.

33. The base station according to claim 32, wherein
the processor is specifically configured to transmit a first beam by using an antenna, wherein the first beam is used to send a common control signal carried on the first carrier corresponding to the first cell, and coverage of the common control signal carried on the first carrier corresponding to the first cell forms the first cell.

34. The base station according to claim 32 or 33, wherein
the second carrier corresponding to the second cell is further used to send a user dedicated measurement signal, wherein the user dedicated measurement signal covers at least the first cell.

35. The base station according to any one of claims 32 to 34, wherein
the common control signal comprises a common reference signal CRS, physical broadcast channel PBCH control information, and system broadcast information SIB.

36. The base station according to any one of claims 32 to 35, wherein
the processor is further configured to: schedule, in different space, the second carrier corresponding to the second cell, use the second carrier corresponding to the second cell to carry the data information and the dedicated reference signal for the terminal, and use the second carrier corresponding to the second cell to carry data information for a terminal covered by the second carrier corresponding to the second cell.

37. The base station according to any one of claims 32 to 36, wherein
if a third base station establishes a third cell, the third cell configures a second carrier, there is an overlapping coverage area between the second cell and the first cell, there is no overlapping coverage area between the second cell and the third cell, and the area in which the terminal is located is not located in the overlapping coverage area between the first cell and the second cell and is not located in an overlapping coverage area between the first cell and the third cell, when the third base station does not schedule the second carrier corresponding to the third cell, the processor is further configured to schedule the second carrier corresponding to the second cell.
